# EUROPEAN PATENT APPLICATION

(11) **EP 4 293 272 A1**
(43) Date of publication of application: **20.12.2023**
(21) Application number: 23178811.8
(22) Date of filing: 13.06.2023
(51) Int. Cl.: F17C 5/00, F17C 5/06

(54) **SAFETY JOINT HOUSING DEVICE**

(30) Priority: 14.06.2022 JP 2022095546
(71) Applicant: Tatsuno Corporation, Tokyo 108-0073 (JP)
(72) Inventor: TAKEZAWA, Masahiro, Tokyo, 108-0073 (JP); TSUGUMI, Yoshitaka, Tokyo, 108-0073 (JP); OTO, Yoshimi, Tokyo, 108-0073 (JP); OUCHI, Toshihiko, Tokyo, 108-0073 (JP)
(74) Representative: Isarpatent

(57) **Abstract**

[OBJECT] To provide a safety joint housing device for preventing a plug or a filling hose from being locked in a lower opening of a casing when the safety joint is separated, thereby preventing a filling device from falling over and being damaged.

[SOLUTION] A safety joint housing device 100 for housing a safety joint 101 including a plug 10 connected to a filling hose 61 and a socket 20 provided in a filling device, the safety joint separating when a tensile load of a predetermined level or over is applied, the safety joint housing device 100 including: a casing for housing the plug 10 and the socket 20 in a connected state; a front roller 30 disposed on a front side of the casing at a lower opening from which the filling hose 61 is led out from the casing so as to be rotatable about a horizontal axis; and two side rollers 40 adjacent to the front roller 30 and rotatably arranged about horizontal axes orthogonal to the axis of the front roller 30; wherein the filling hose 61 passes through the casing side of a U-shaped portion formed by the front roller 30 and the two side rollers 40.

## Description

### Field of the Invention

The present invention relates to a device for housing a safety joint that is used in a filling device for filling gas such as hydrogen gas used as fuel, and has a function of separating the filling device and a filling hose in an emergency.

### Description of the Related Art

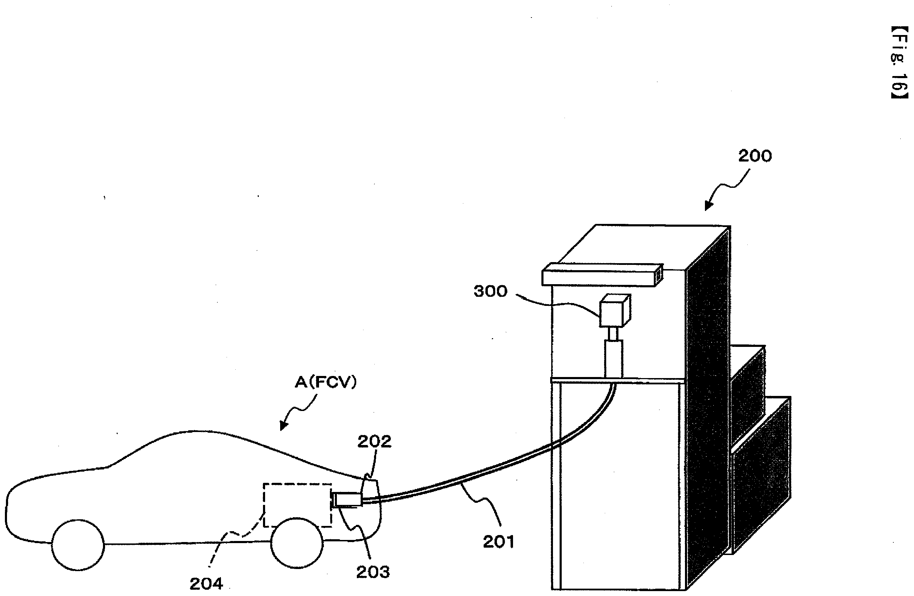

In a vehicle A (for example, a fuel cell vehicle, FCV) that runs on hydrogen as a fuel, as shown in Fig. 16, hydrogen gas is filled by connecting a filling nozzle 202 provided at a tip of a filling hose 201 and a vehicle side filling port 203 in a hydrogen filling facility. This filling is controlled based on the maximum operating pressure of a hydrogen tank 204 mounted on the vehicle A. Although it is an extremely rare case, there is a case where the vehicle A starts moving for some reason without The vehicle A may start moving for some reason without a worker who is doing a hydrogen filling operation being aware of it. Similarly, although it is an extremely rare case, there is a case where another vehicle collides with the vehicle A that is being filled with hydrogen. In such cases, the filling hose 201 will be pulled, the filling device 200 will overturn and break, and a flammable hydrogen gas will spout out, resulting in a dangerous situation. In order to avoid such a situation, a safety joint 300 for emergency release is provided in a region between the filling device 200 and the filling hose 201, and the safety joint 300 is separated when a tensile load of a predetermined level or over acts on the filling hose 201. Thus, the filling device 200 is prevented from being damaged. Separation of the safety joint 300 is an extremely rare event and does not occur on a daily basis.

Even if the filling hose 201 is not subjected to a tensile load of a certain level or above, when the filling hose 201 swings, the moment due to the swinging is applied to a filling hose mounting portion of a vehicle-side member (plug) of the safety joint 300. There is a risk that the mounting portion will be damaged and a hydrogen gas will leak from the damaged portion. In response to this, the applicant has proposed a measure to prevent the plug of the safety joint 300 from being damaged by the moment caused by the swinging motion of the filling hose 201 (see JP-B-6590159 gazette).

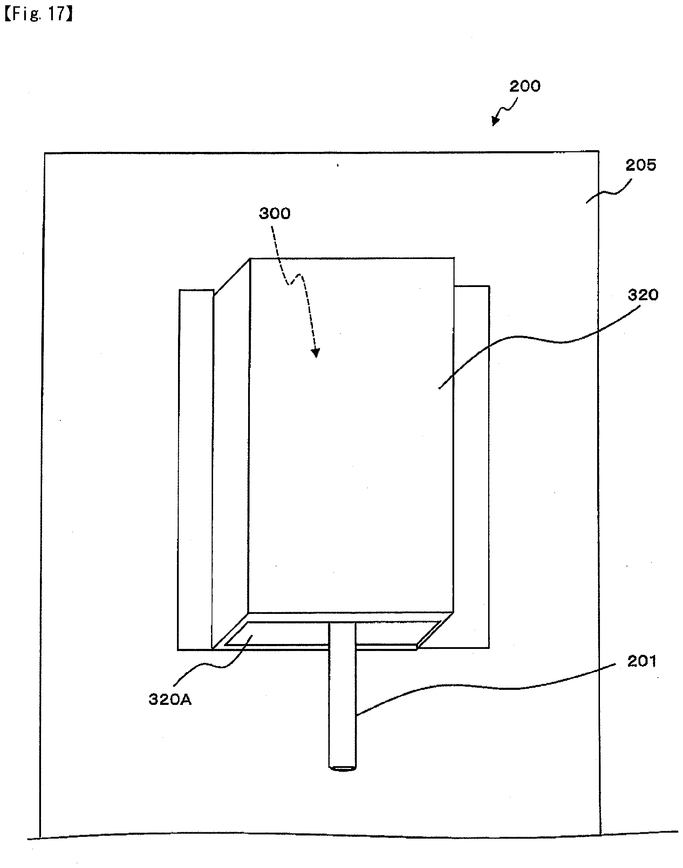

In Fig. 17, the safety joint 300 described above (indicated only by the dashed lead line in Fig. 17) is built in a casing 320. Reference numeral 205 indicates an element of the casing of the hydrogen filling device. The safety joint 300 includes a plug (a member on the vehicle side of the safety joint) connected to the filling hose 201, and a socket that is a member on the hydrogen filling device side, and the plug separates from the socket (the safety joint 300 separates) when a tensile load greater than or equal to a predetermined value acts. When the safety joint 300 is separated, the filling hose 201 and the plug coupled thereto pass a hollow portion of a guide member (built into the casing 320 but not shown in Fig. 17) and escape from a lower opening 320A of the casing 320. When the vehicle starts unexpectedly or when another vehicle collides with the vehicle being filled with hydrogen, the force pulling the hydrogen filling device 200 acts horizontally (laterally) rather than vertically, which may cause the vehicle-side member (plug) to be caught (locked) in the lower opening 320A. Then, when the vehicle unexpectedly starts and the safety joint 300 is separated, if the plug locks in the lower opening 320A, the force of the vehicle pulling the filling hose 201 will be transmitted to the hydrogen filling device 200 via the locking point between the plug and the lower opening 320A of the casing 320, which may cause the hydrogen filling device 200 to overturn.

In addition, since a spring, an infrared fiber, a mesh, etc. are arranged around an outer periphery of the filling hose 201, and a cover of the filling hose 201 is also present, the filling hose 201 more likely to lock (get caught) with the lower opening 320A of the casing 320. That is, in addition to the plug at the tip of the filling hose 201 being locked to the lower opening 320A, there is a possibility that the filling hose 201 will be locked to the casing lower opening 320A. Then, there is a risk that the vehicle will pull the hydrogen filling device 200 and overturn and damage the hydrogen filling device 200. The conventional technology described above is not intended to deal with such a situation.

The content of JP-B-6590159 gazette is incorporated herein by reference in its entirety.

### SUMMARY OF THE INVENTION

### Problems to be Solved by the Invention

The present invention has been proposed in view of the above-mentioned problems of the prior art, and the object thereof is to provide a safety joint housing device for preventing the plug of the safety joint or the filling hose from being locked in the lower opening of the casing when the safety joint is separated, thereby preventing the filling device from falling over and being damaged.

A safety joint housing device 100, for housing a safety joint 101 including a plug 10 connected to a filling hose 61 and a socket 20 provided in a filling device, the safety joint separating when a tensile load of a predetermined level or over is applied, according to the present invention is characterized by including: a casing for housing the plug 10 and the socket 20 in a connected state; a front roller 30 disposed on a front side of the casing at a lower opening from which the filling hose 61 is led out from the casing so as to be rotatable about a horizontal axis; and two side rollers 40 adjacent to the front roller 30 and rotatably arranged about horizontal axes orthogonal to the axis of the front roller, at least one of the two side rollers 40 is displaceable; wherein the filling hose 61 passes through the casing side of a U-shaped portion formed by the front roller 30 and the two side rollers 40.

The above safety joint housing device preferably further includes a front portion 51A for supporting the front roller 30, and the front portion 51A is formed with an elongated hole 52 into which one of the central shafts of the side rollers 40 is inserted (Figs. 1 to 3). Or, the above safety joint housing device preferably further includes a front portion 51A-2 for supporting the front roller 30, and a notch 52-2 is formed in the front portion 51A-2, one end of the notch 52-2 reaching an outer edge of the front portion 51A-2 (Figs. 6 and 7). In addition, the above safety joint housing device preferably further includes a front portion 51A-3 for supporting the front roller 30, and a circular through-hole 52-3 into which at least one of central shafts of the side rollers 40 is inserted is formed in the front portion 51A-3, and a region 51R-3 extending from the through-hole 52-3 to an outer edge portion of the front portion 51A-3 is configured to be deformable or breakable (Figs. 8 and 9).

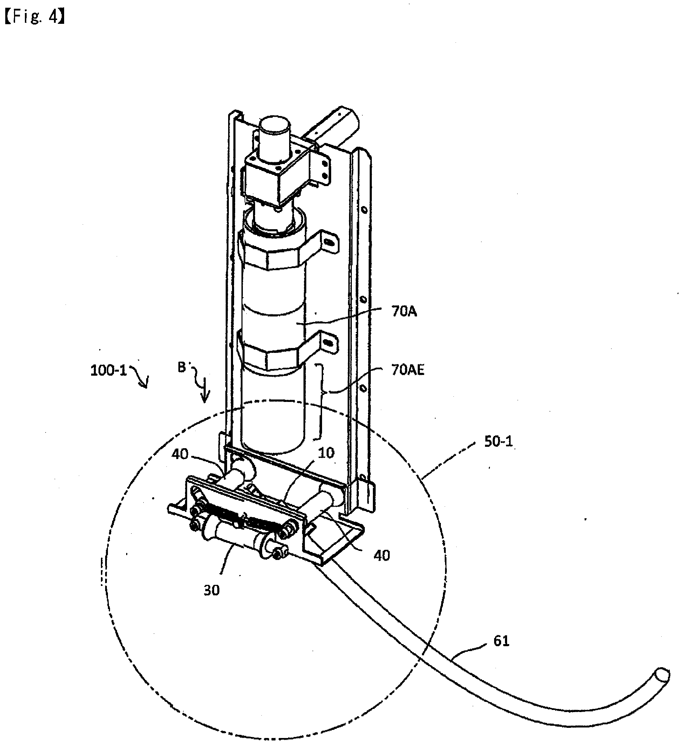

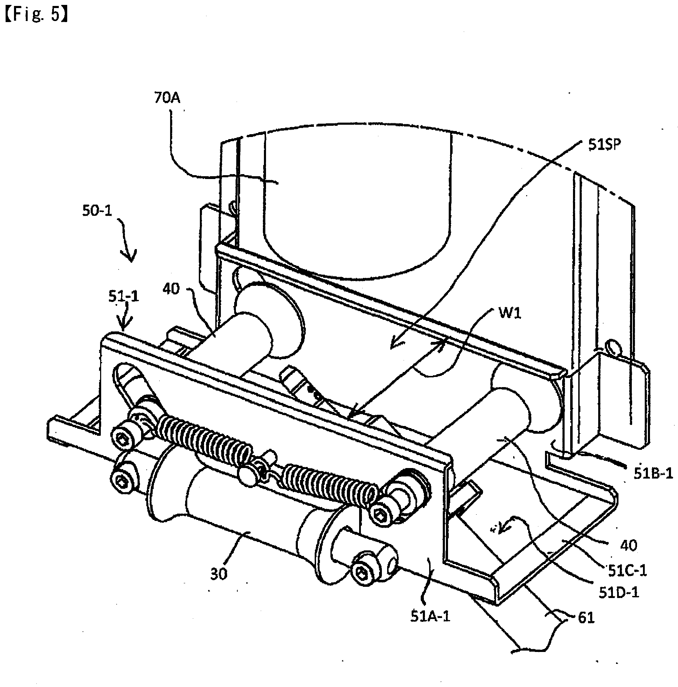

The above safety joint housing device preferably further includes a hollow guide member 70A in the casing, wherein the plug 10 separated from the socket 20 is arranged to pass through a hollow portion of the guide member 70A, and a lower opening of the guide member 70A is located near the U-shaped portion. Further, the above safety joint housing device preferably further includes a roller support member 51-1 for supporting the front roller 30 and the two side rollers 40, the roller support member 51-1 being generally configured in a U-shape, and an upper open space of the U-shape portion of the roller support member 51-1 being positioned above the front roller 30 and the side rollers 40 (Figs. 4 and 5).

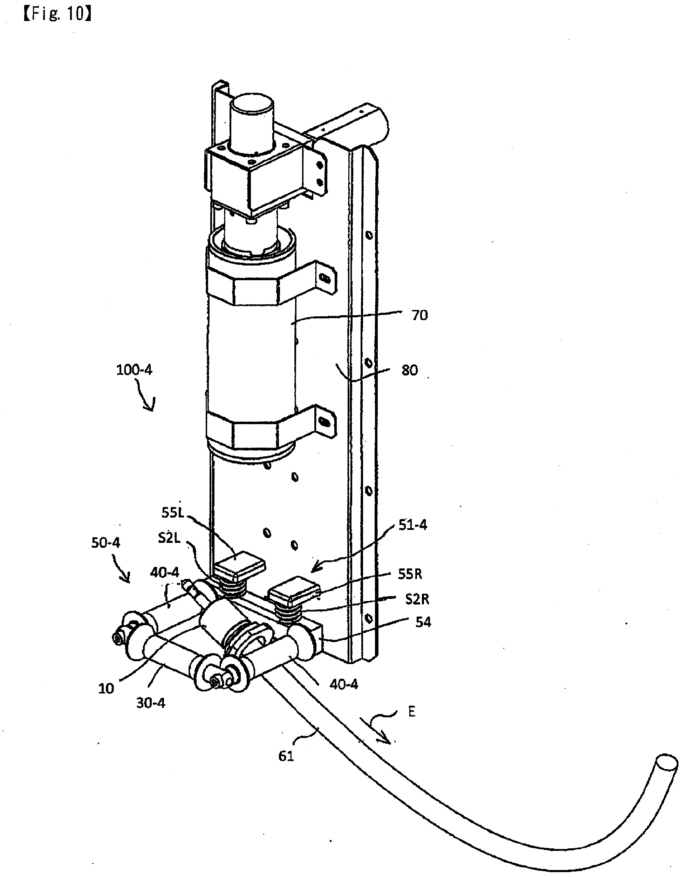

In the above safety joint housing device, an end of a central shaft of at least one of the side rollers 40-4 is preferably supported by a base plate-shaped member 54, and the base plate-shaped member 54 is preferably connected to projecting members 55R, 55L fixed to an inner wall surface of the casing (Fig. 17) through a first elastic member (springs S2R, S2L) and the base plate-shaped member 54 is preferably connected to the inner wall surface of the casing through a second elastic member (spring S2T) (Figs. 10 to 12).

In the above safety joint housing device, it is preferable that a periphery of each of the two side rollers 40-6 is partially surrounded by a side roller enclosing portion 51B-6 of a roller support member 51-6 that supports the front roller 30-6 and the two side rollers 40-6, and a front part 51A-6 where the front roller 30-6 is supported is composed of a plate-shaped member, and an area 51BA-6 where a longitudinal end of the plate-shaped member supports a central shaft of the side roller 40-6 and a longitudinally central area 51R2-6 of the plate-shaped member are separated from each other, and the areas 51R2-6 are connected by a hinge mechanism 56.

A safety joint housing device 100-5, for housing a safety joint including a plug 10 connected to a filling hose 61 and a socket 20 provided in a filling device, the safety joint separating when a tensile load above a predetermined level is applied, according to the present invention is characterized by including: a casing for housing the plug 10 and the socket 20 in a connected state; and an arm arrangement structure 50-5 at a lower opening of the casing, wherein the arm arrangement structure 50-5 includes a front arm 33 and two side arms 43 adjacent to the front arm 33, at least one of the side arms 43 being displaceable, each of the front arm 33 and the side arms 43 has a cylindrical portion 33A, 43A with a smooth circular cross-section (including an oval shape) and plate-like portions 33B, 43B fixed to the cylindrical portion 33A, 43A, the plate-like portions 33B, 43B are rotatably supported on an inner wall surface of the casing, and each arm 33, 43 is connected to an elastic member (return springs S3, S4R, S4L) connected to the inner wall surface of the casing or to a member fixed thereto.

### EFFECTS OF THE INVENTION

According to the present invention with the above-described construction, even if a fuel cell vehicle is started during hydrogen filling operation, the plug 10 and the socket 20 are separated, and the tension of the filling hose 61 does not act on a main body of a hydrogen filling device. Then, even if the filling hose 61 or the plug 10 at a tip thereof comes into contact with the rollers 30, 40 in an opening of a casing, surfaces of the rollers 30, 40 are smooth, so that the filling hose 61 or the plug 10 is pulled in a pulling direction of the filling hose 61 without being locked, and smoothly comes out of the casing. Alternatively, even if the filling hose 61 or the plug 10 at its tip comes into contact with the rollers 30, 40 at the opening of the casing, rotations of the rollers 30, 40 prevent the filling hose 61 or the plug 10 from being locked with the rollers 30, 40, and the filling hose 61 or the plug 10 is pulled in the pulling direction of the filling hose 61 and smoothly comes out of the casing. As a result, the filling hose 61 or the plug 10 is not locked (caught) in the opening at the tip of the casing, and a hydrogen filling device is prevented from being pulled by the tensile force acting on the filling hose 61.

Even if the filling hose 61 or the plug 10 is caught between the rollers 30, 40 and engages with the rollers 30, 40, at least one side roller 40 moves and the plug 10 or the filling hose 61 is released from the engagement with the roller 40, even if the vehicle suddenly starts during hydrogen filling operation, the hydrogen filling device is prevented from being pulled. In other words, displacement of at least one side roller 40 allows horizontal and vertical distances between the side rollers 40 or between the front roller 30 and the side roller 40 to increase, and intervals between the rollers 30, 40 increase, which disengages the plug 10 and the rollers 30, 40. In addition, rotations of the rollers 30, 40 cause very little friction with the plug 10 or the filling hose 61, so that when the plug 10 or the filling hose 61 engages the rollers 30, 40, the engagement is immediate released.

### BRIEF DESCRIPTION OF THE DRAWINGS

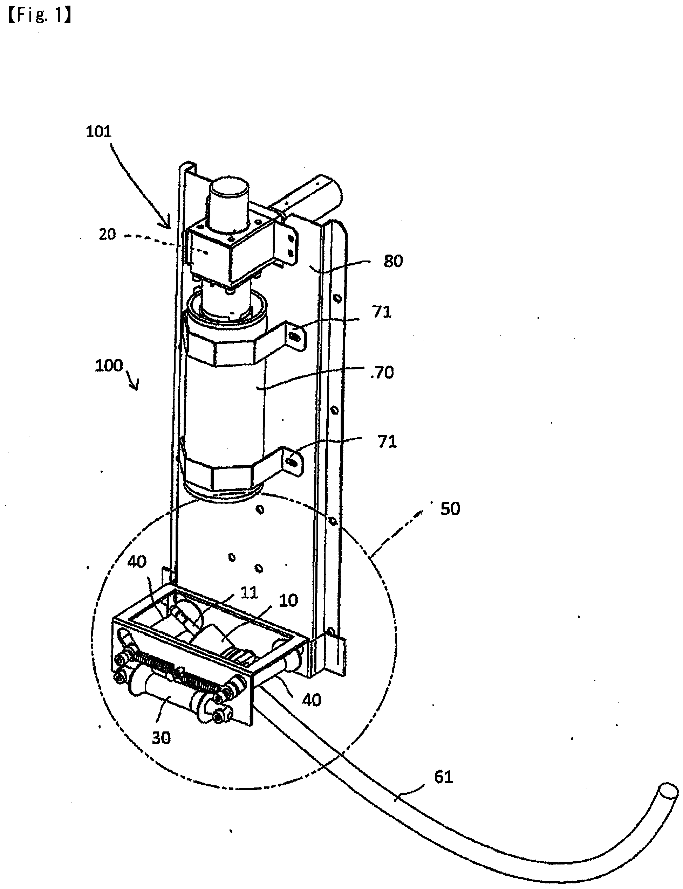

[Figure 1] An explanatory view showing a safety joint housing device according to the first embodiment of the present invention in which a plug is separated from a socket and contacts with a roller at a lower edge of a casing.

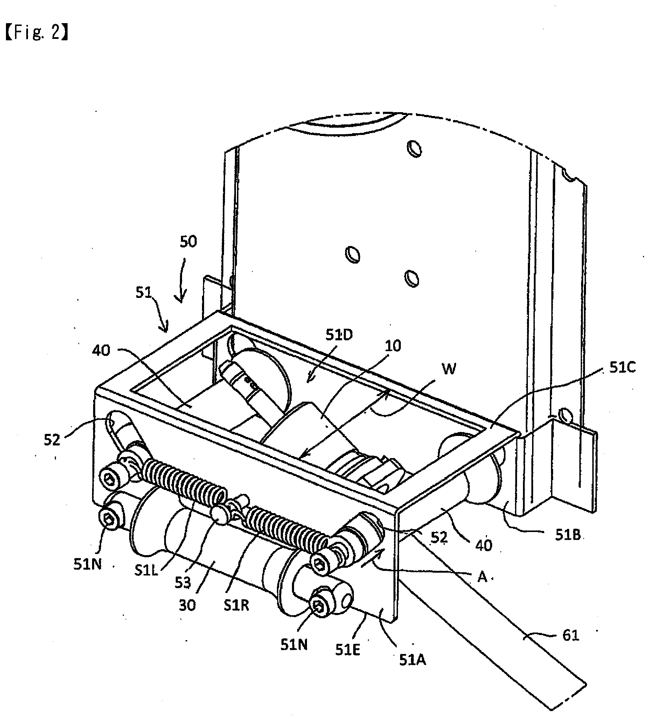

[Figure 2] An enlarged view of the roller arrangement structure 50 in Fig. 1.

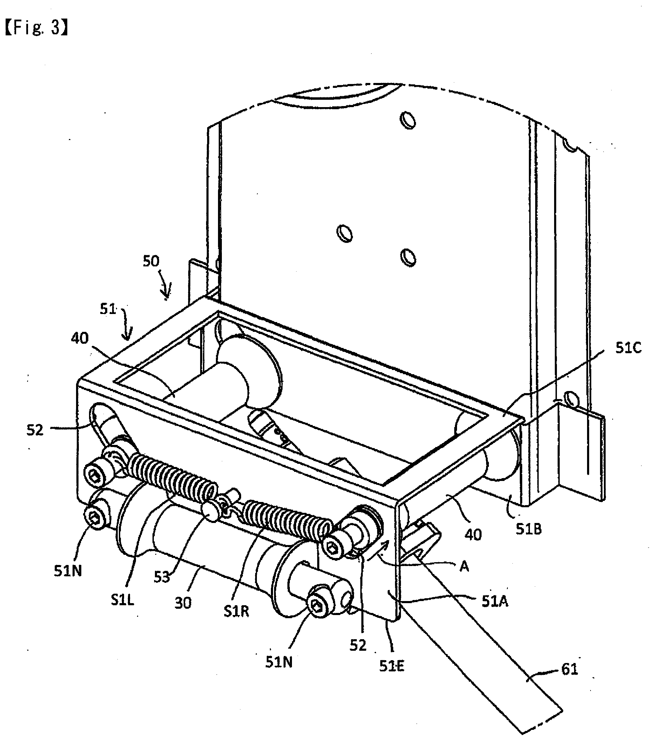

[Figure 3] An enlarged view of the roller arrangement structure similar to Fig. 2, but shows a state in which the central shaft of the side roller has moved upward within an elongated hole from the state shown in Fig. 2.
[Figure 4] A view showing the first modification of the first embodiment.
[Figure 5] An enlarged view of the roller arrangement structure in the first modification shown in Fig. 4.

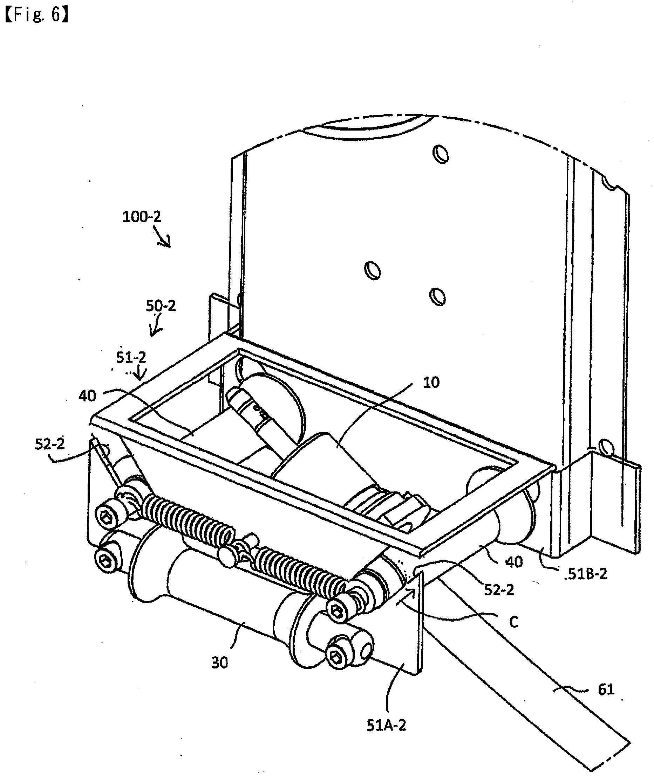

[Figure 6] An explanatory view of a roller arrangement structure in the second modification of the first embodiment.

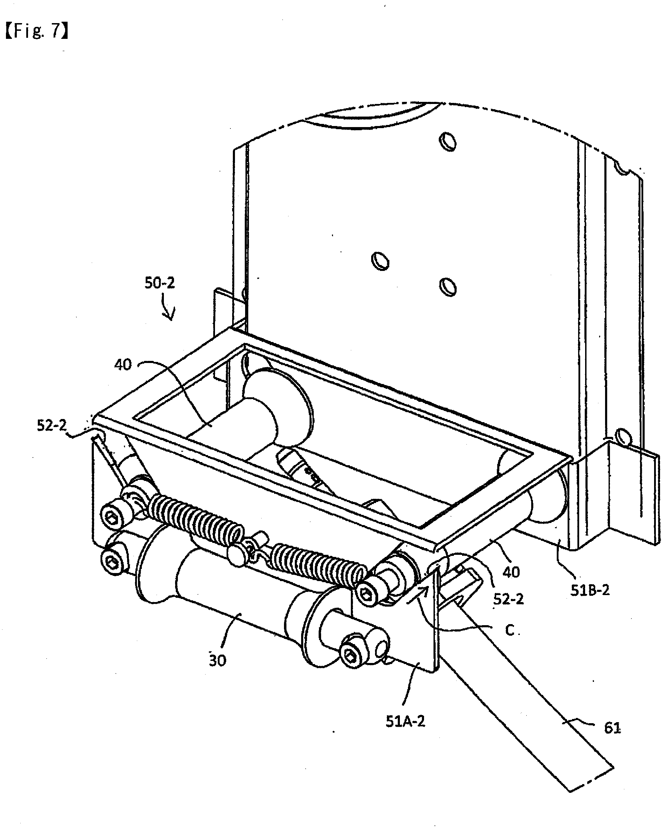

[Figure 7] A view showing a state in which a central shaft of a side roller moves upward within a notch from the state shown in Fig. 6.

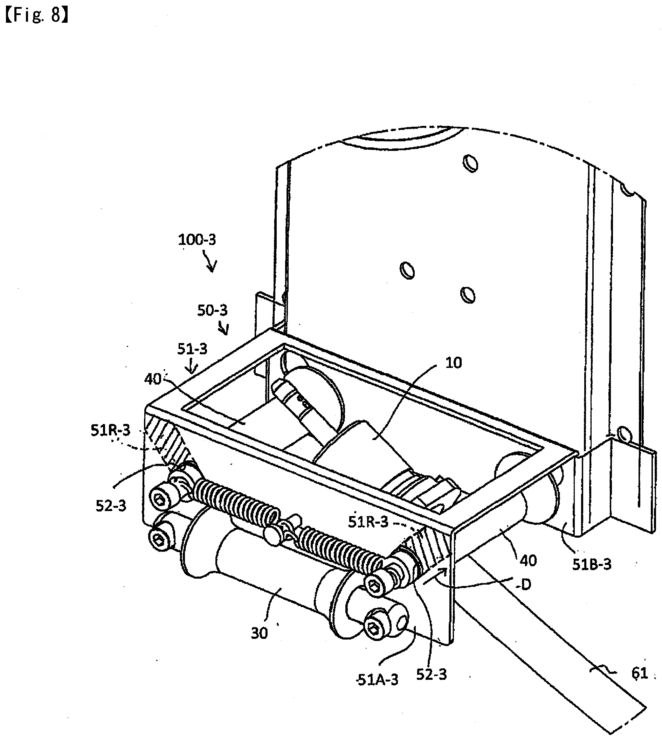

[Figure 8] An explanatory view of a roller arrangement structure in the third modification of the first embodiment.

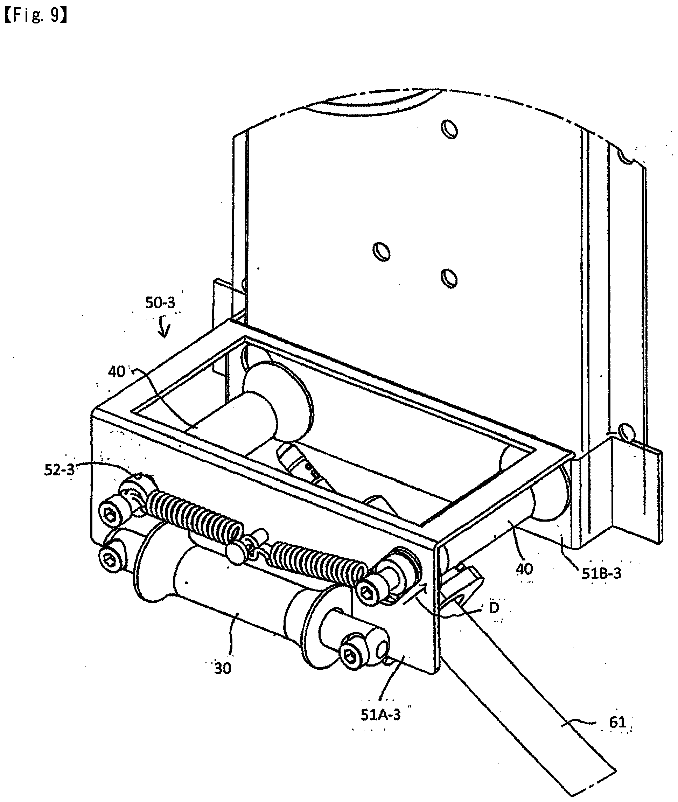

[Figure 9] A view showing, in the third modification of the first embodiment, a through hole into which a central shaft of a side roller is inserted is deformed from the state shown in Fig. 8, and the central shaft moves upward in the deformed through hole.
[Figure 10] An explanatory perspective view of a safety joint housing device according to the second embodiment of the present invention.

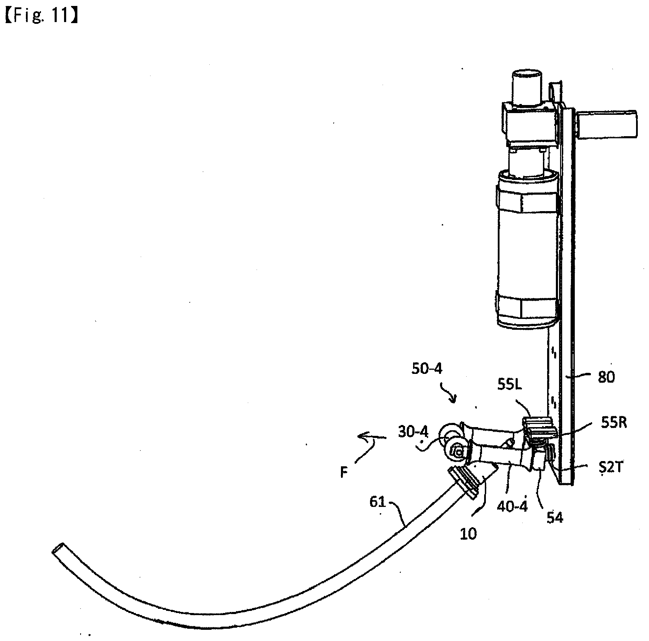

[Figure 11] A side view of the safety joint housing device according to the second embodiment.

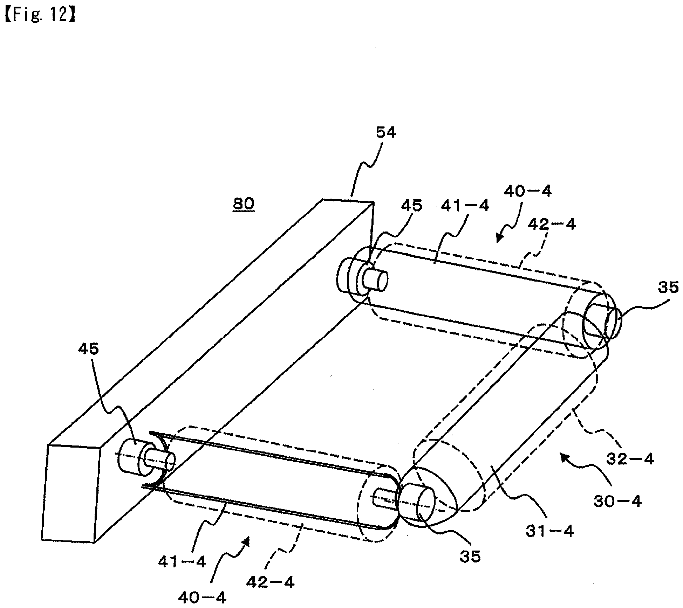

[Figure 12] An explanatory view showing a mode in which central shafts of adjacent rollers are connected to each other in the second embodiment.

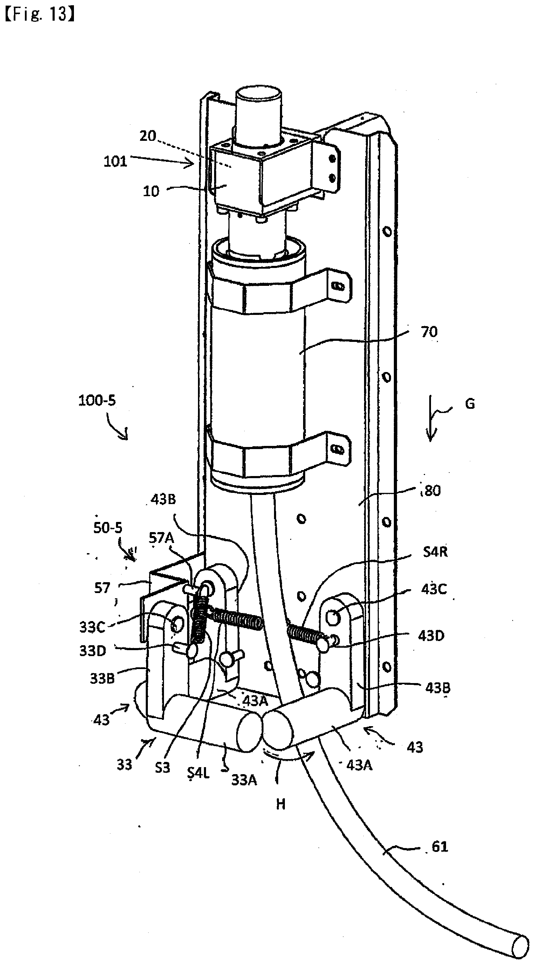

[Figure 13] An explanatory view of a safety joint housing device according to the third embodiment of the present invention, showing a state in which a plug is not separated from a socket.

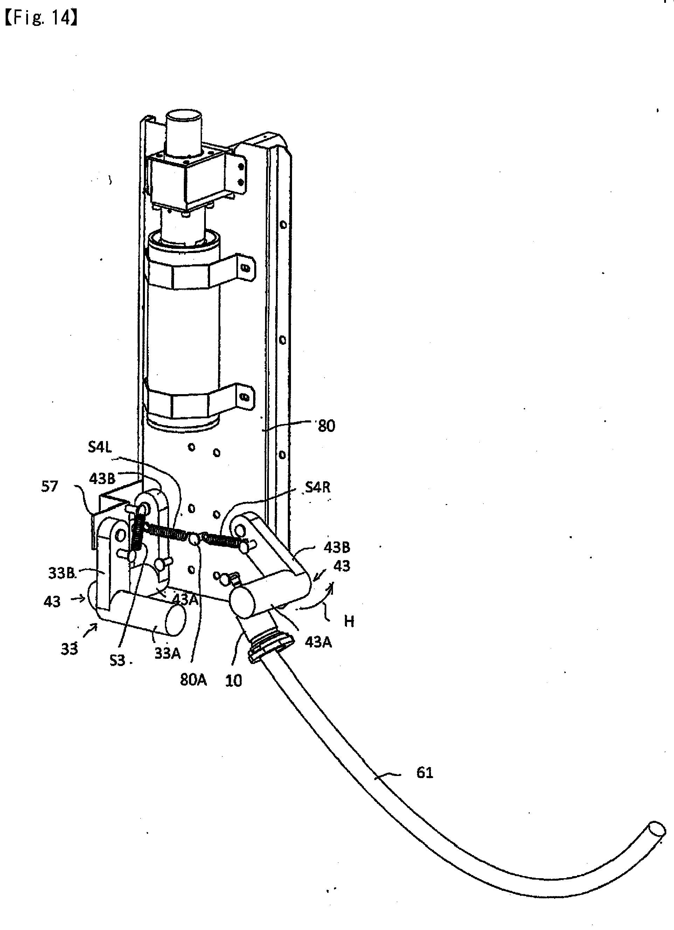

[Figure 14] An explanatory view showing a state in which a plug is separated from a socket and reaches the vicinity of an opening of a casing in the third embodiment.

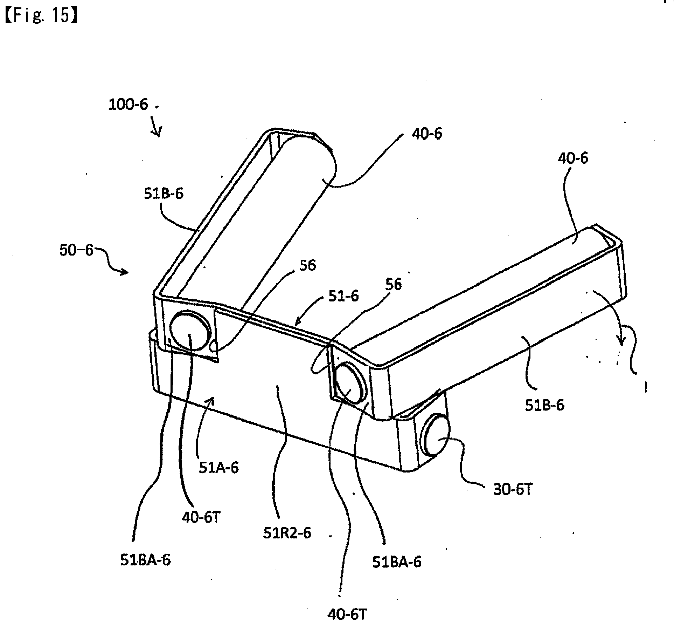

[Figure 15] An explanatory view showing a roller arrangement structure according to the fourth embodiment of the present invention.
[Figure 16] An explanatory view showing an outline of a hydrogen filling facility.
[Figure 17] A view showing a safety joint attached to a hydrogen filling device.

### MODE FOR CARRYING OUT THE INVENTION

Hereinafter, embodiments of the present invention will be described. In Figs. 1 to 15, an illustration of the casing 320 in Fig. 17 is omitted in order to avoid complication of illustration. First, the first embodiment including various modifications of the present invention will be described with reference to Figs. 1 to 9. Figures 1 to 3 show the first embodiment without modifications. A safety joint housing device according to the first embodiment is generally designated as a reference numeral 100. In Fig. 1, the safety joint housing device 100 has a function of housing a safety joint 101. The safety joint 101 includes a plug 10 (vehicle side member of the safety joint) connected to a filling hose 61 and a socket 20 (a member on the side of the hydrogen filling device). The plug 10 and the socket 20 of the safety joint 101 have a function of separating when a tensile load above a predetermined level is applied. In addition, the safety joint housing device 100 has a roller arrangement structure 50, and the roller arrangement structure 50 is used, when the filling hose 61 and the plug 10 are caught between the rollers 30 and 40 and are engaged with the rollers 30 and 40, to disengage the plug 10 or the filling hose 61 from the rollers 30, 40 through displacement of the roller 40 itself. In Fig. 1, a reference numeral 70 is a hollow guide member and a reference numeral 11 is a rod of the plug 10.

In Fig. 1, the guide member 70 is composed of a hollow cylindrical member, and when the plug 10 is separated from the socket 20, the separated plug 10 and the filling hose 61 move through the hollow portion inside the guide member 70. As shown in Figs. 1 to 3, a substrate 80 is a portion of the casing 320 (Fig. 17) on the side of the hydrogen filling device 200 (Figs. 16 and 17), and is provided to attach the safety joint 101 including the plug 10 and the socket 20 together with the casing 320 to the hydrogen filling device 200 (Figs. 16, 17). In Fig. 1, the guide member 70 is fixed to the substrate 80 via the mounting member 71. Although not clearly shown in Figs. 1 to 3, the safety joint 101 composed of the plug 10 and the socket 20 and the guide member 70 are housed inside the casing 320. As shown in Fig. 1, the roller arrangement structure provided in the lower opening 320A (opening on the vehicle side: see Fig. 17) of the casing 320 (not shown in Fig. 1: see Fig. 17) below the guide member 70 is designated as a whole by reference numeral 50.

The roller arrangement structure 50 will be described with reference to Figs. 2 and 3. In Figs. 2 and 3, the roller arrangement structure 50 is provided with a front roller 30 and two side rollers 40 adjacent to the front roller 30. A roller support member 51 that supports the rollers 30 and 40 is made of a sheet metal material, and has a front portion 51A, a rear portion 51B, and an upper surface portion 51C. Two elongated holes 52 are formed in the front portion 51A, and the holes 52 are formed to displaceably support the two side rollers 40, respectively. A central shaft (rotational shaft) of the front roller 30 is rotatably supported near both ends thereof by a shaft supporting portion 51N provided in the front portion 51A. In Figs. 2 and 3, the central shafts of the two side rollers 40 provided on the left and right are each inserted into an elongated hole 52 formed in the front portion 51A at the vicinity of an end on the front roller 30 side. The vicinity of the end on the side opposite to the front roller 30 (on the substrate 80 side) is inserted into an elongated hole (not shown) formed in a back surface portion 51B. The central shaft of the side roller 40 is rotatably supported by the elongated hole 52 of the front portion 51A of the support member 51 and the elongated hole (not shown) of the rear portion 51B. In the illustrated embodiment, the front roller 30 and the side rollers 40 are configured so that their central shafts and roller portions can rotate integrally. On the other hand, although not shown, the central shaft and the roller portion can be configured separately so that the central shaft does not rotate, but only the roller portion can rotate.

In the elongated hole 52 formed in the front portion 51A of the support member 51, the elongated hole 52 formed on the right side in Figs. 2 and 3 extends in a direction of the arrow A (obliquely upward to the right). On the other hand, the elongated hole 52 on the left side in Figs. 2 and 3 extends obliquely upward to the left. When the filling hose 61 or the plug 10 engages (hooks) the side roller 40, the central shaft of the side roller 40 can move in the direction of the arrow A in the elongated hole 52 (displaceable). Here, Fig. 2 shows a state before the side roller 40 moves in the arrow A direction, and Fig. 3 shows a state after the side roller 40 moves in the arrow A direction. In the illustrated embodiment, the elongated holes 52 are formed corresponding to the positions of both left and right side rollers 40. However, it is also possible to form the elongated hole 52 only on one side roller side (for example, only on the right side roller 40 side). It is also possible to omit the elongated hole in the rear portion 51B and form the elongated hole 52 only on the front portion 51A side so that the side rollers 40 move on the front portion 51A side. The front portion 51A of the roller support member 51 is provided with restoring elastic members S1R and S1L (springs: helical springs in the illustrated example). After the engagement between the side roller 40 and the filling hose 61 or the plug 10 is released (described later) due to the central shaft of the side roller 40 moves in the direction of the arrow A in the elongated hole 52, the elastic repulsive force (tensile force) of the return springs S1R and S1L causes the central shaft of the side roller 40 is moved in the direction opposite to the arrow A in the elongated hole 52 and restored from the position shown in Fig. 3 to the position shown in Fig. 2. The restoring spring S1R connects the locking portion 53 arranged in the front portion 51A and the front end portion, on the front roller 30 side, of the central shaft of the side roller 40 on the right side in Figs. 2 and 3. The restoring spring S1L connects the locking portion 53 to the front end portion, on the front roller 30 side, of the central shaft of the side roller 40 on the left side in Figs. 2 and 3.

In Fig. 2, an upper surface portion 51C of the roller support member 51 is formed with an opening 51D. The plug 10 separated from the socket 20 and the filling hose 61 pass through the hollow portion in the guide member 70 and pass through the opening 51D. The width W (Fig. 2) of the opening S1D of the upper surface portion 51C is set larger than the length in the longitudinal direction of the side roller 40 (cylindrical portion with the same diameter, excluding brim portions). This is to prevent the plug 10 separated from the socket 20 from engaging (catching) with an inner edge of the opening 51D. Compared to the lower edge 51E of the front portion 51A of the roller support member 51, the lower edge of the front roller 30 protrudes downward (downward in Figs. 2 and 3). When the plug 10 is engaged with the lower edge 51E of the front portion 51A, the plug 10 is reliably brought into contact with the front roller 30, and the lower edge of the front roller 30 protrudes downward to avoid engaging the lower edge 51E.

In the first embodiment shown in Figs. 1 to 3, for example, even if a fuel cell vehicle starts during the hydrogen filling operation, the plug 10 and the socket 20 are separated, and the hydrogen filling device 200 is not subjected to a tensile force of the filling hose 61, which prevents the hydrogen filling device 200 from being damaged. When the plug 10 and the socket 20 are separated, even if the filling hose 61 or the plug 10 contacts the rotatable rollers (especially the side rollers 40) in the opening of the casing (Fig. 17), the surfaces of the rollers 30, 40 are smooth, or because the rollers 30, 40 rotate, the filling hose 61 or the plug 10 will not engage the rollers 30, 40. Even if the plug 10 is engaged with the side roller 40, the central shaft of the side roller 40 moves in the direction of arrow A (see Figs. 2 and 3) in the elongated hole 52 formed in the front portion 51A of the roller arrangement structure 50. As a result, vertical position and horizontal position of the side rollers 40 fluctuate, and intervals (horizontal distance and vertical distance) between the left and right side rollers 40 widen, which causes the plug 10 or the filling hose 61 to be easily pulled out. The engagement between the plug 10 or filling hose 61 and the rotatable side rollers 40 is then released so that the plug 10 or the filling hose 61 can be easily removed from the casing (Fig. 17) and removed. After the engagement between the plug 10 and the side rollers 40 is released, the rotational shaft (central shaft) of the side rollers 40 moves through the elongated hole 52 in the opposite direction of the arrow A due to elastic contractions of the restoring springs S1R and S1L to return from the position of Fig. 3 to the position of Fig. 2.

The first modification of the first embodiment shown in Figs. 1 to 3 will be described with reference to Figs. 4 and 5. Description of the first modification with reference to Figs. 4 and 5 will mainly focus on parts different from those of the first embodiment, and description of the same parts as the first embodiment will be omitted. In the first modification of the first embodiment shown in Figs. 4 and 5, members similar to those of the first embodiment shown in Figs. 1 to 3, such as the plug 10, the filling hose 61 and the rollers 30, 40, will be described with the same reference numerals. The same applies to Figs. 6 to 15. In Fig. 4, a safety joint housing device according to the first modification of the first embodiment is indicated as a whole by a reference numeral 100-1 and has a guide member 70A. The guide member 70A extends downward (in a direction of the arrow B in Fig. 4) by a region indicated by a reference numeral 70AE from the guide member 70 in the first embodiment of Fig 1. Thus, the opening at the lower end of guide member 70A is closer to a roller arrangement structure 50-1 (compared to the opening at the lower end of guide member 70 in Fig. 1). This makes it difficult for the plug 10 separated from the socket 20 to engage (catch) the roller support member 51-1 (Fig. 5) in the roller arrangement structure 50-1.

The roller arrangement structure 50-1 in the first modification will be described with reference to Fig. 5. In Fig. 5, the roller support member 51-1 has a U-shaped cross section, and the U-shaped upper open space 51SP is located above the front roller 30 and the side rollers 40. The roller support member 51-1 has a front portion 51A-1, a rear portion 51B-1 and a bottom portion 51C-1. The lower surface portion 51C-1 is configured in the same manner as the upper surface portion 51C in the first embodiment, and connects the front surface portion 51A-1 and the rear surface portion 51B-1 to improve the strength of the roller support member 51-1. In Fig. 5, the opening 51D-1 in the lower surface portion 51C-1 is arranged below the rollers 30, 40. Therefore, the width W1 of the space above the roller support member 50-1 (space 51SP on the open side) can be set to be even larger than the opening width W shown in Fig. 2. Setting the width W1 of the space 51SP on the open side to be larger than the opening width W (Fig. 2) in the first embodiment, engagement (hooking) of the plug 10 with the inner edge of the opening 51 SP of the roller support member 51-1 is further prevented. Although not shown, in Fig. 4, instead of the roller arrangement structure 50-1 shown in Fig. 5, the roller arrangement structure 50 shown in Figs. 1 to 3 can be provided. Other configurations and effects of the first modification shown in Figs. 4 and 5 are the same as those of the first embodiment shown in Figs. 1 to 3.

Next, the second modification of the first embodiment will be described with reference to Figs. 6 and 7. In Figs. 6 and 7, parts different from the embodiment shown in Figs. 1 to 5 will be mainly explained, and the explanation of the parts similar to the embodiment shown in Figs. 1 to 5 will be omitted. A safety joint housing device 100-2 according to the second modification of the first embodiment has a roller arrangement structure 50-2. In the first embodiment shown in Figs. 1 to 3, the elongated hole 52 is formed in the front portion 51A of the roller support member 51, but in the second modification shown in Figs. 6 and 7, a notch 52-2 extending obliquely upward is formed, and the central shaft of the side roller 40 is inserted into the notch 52-2. One end of the notch 52-2 reaches an outer edge of the front portion 51A-2, and the direction in which the notch extends is the same as the direction in which the elongated hole 52 extends in Figs. 1 to 3. The notches 52-2 are formed in the front portion 51A-2 at positions corresponding to the central shafts of the left and right side rollers 40 in Figs. 6 and 7. It is also possible to form the notch 52-2 only for the side roller 40 on either side. Here, although not clearly illustrated, the notch 52-2 is also formed in the rear surface portion 51B-2 in addition to the front surface portion 51A-2. It is also possible to form the notch 52-2 only in the front part 51A-2 or only in the rear part 51B-2.

In the second modification shown in Figs. 6 and 7, the notch 52-2 communicates with the outside of the front portion 51A-2 of the roller support member 51-2. When the plug 10 is disengaged from the socket 20 and the plug 10 is engaged with the side roller 40, one end of the central shaft of the side roller 40 moves in the direction of arrow C from the state shown in Fig. 6, as shown in Fig. 7, the one end of the central shaft moves toward and reaches the outer edge of the front portion 51A-2. As a result, the distance between the side rollers 40 is further increased compared to the case of the first embodiment (Figs. 1 to 3), and the plug 10 is more easily removed from the side rollers 40. Other configurations and effects of the second modification shown in Figs. 6 and 7 are the same as those of the embodiment shown in Figs. 1 to 5.

Next, the third modification of the first embodiment will be described with reference to Figs. 8 and 9. In Figs. 8 and 9, description of the third modification will mainly focus on parts different from those of the embodiment of Figs. 1 to 7, and description of the same parts as the embodiment of Figs. 1 to 7 will be omitted. In Figs. 8 and 9, a safety joint housing device 100-3 according to the third modification has a roller arrangement structure 50-3. In the first embodiment shown in Figs. 1 to 3, the elongated hole 52 is formed in the front portion 51A of the roller support member 51, but in the third modification shown in Figs. 8 and 9, a circular through-hole 52-3 (round hole) is provided instead of the elongated hole in the front portion 51A-3 of the roller support member 51-3, and one end of the central shafts of the side roller 40 is inserted into the through-hole 52-3. In Figs. 8 and 9, regions 51R-3 (hatched regions in Figs. 8 and 9), which are regions obliquely above the through holes 52-3 in the front portion 51A-3 and extend to an outer edge portion, are made of a material that is easily deformed or easily broken (for example, foaming agent, rubber with slits, silicone material, thin sheet metal, etc.). Extending directions of the regions 51R-3 are the same as the longitudinal directions (extending directions) of the elongated holes 52 or the notches 52-2 in Figs. 1 to 7. The regions 51R-3 made of easily deformable or easily broken material are formed at two locations on the left and right sides corresponding to the side rollers 40 in the front portion 51A-3. Although not clearly illustrated, the regions 51R-3 made of easily deformable or easily broken material are formed in the front portion 51A-3 and also in the rear portion 51B-3. It is also possible to form the regions 51R-3 only in the front portion 51A-3 or only in the rear portion 51B-3.

In the third modification of the first embodiment shown in Figs. 8 and 9, the regions 51R-3 diagonally above the through-holes 52-3 and reaching the outer edge are made of a material that is easily deformed or easily broken. With this, when the plug 10 is disengaged from the socket 20 and engages the side rollers 40, when a tensile force acts on the plug 10 through the filling hose 61, the regions 51R-3 deform or break. Then, as shown in Fig. 9, the through-hole 52-3 through which the central shaft of the right side roller 40 penetrates is deformed like an elongated hole extending obliquely upward. Alternatively, the region 51R-3 is damaged, resulting in a state similar to the notch 52-2 shown in Figs. 6 and 7. As a result, the central shaft of the right side roller 40 moves in a direction of the arrow D from the state shown in Fig. 8, and as shown in Fig. 9, horizontal distance and vertical distance between the side rollers 40 increases, and the state of engagement between the plug 10 and the side rollers 40 is likely to be released (the state in which the rollers 40 are likely to come off), and the plug 10 can be easily pulled out of the casing (Fig. 17). Other configurations and effects of the third modification of the first embodiment shown in Figs. 8 and 9 are the same as those of the embodiment shown in Figs. 1 to 7. Although not shown, in Figs. 1 to 9, instead of the rollers 30 and 40, it is possible to use arms having a circular or oval cross section and a smooth surface.

Next, the second embodiment of the present invention will be described with reference to Figs. 10 and 11. A safety joint housing device 100-4 according to the second embodiment has a roller arrangement structure 50-4, and the structure 50-4 includes a support member 51-4 that supports the front roller 30-4 and the left and right side rollers 40-4. The second embodiment differs from the first embodiment shown in Figs. 1 to 9 in the configuration of the roller support member 51-4, particularly in the configuration that allows the side rollers 40-4 to be displaced. In Fig. 10, the roller support member 51-4 includes a base plate member 54, projecting members 55R and 55L, first springs S2R and S2L (first elastic members), a second spring S2T (second elastic member: Fig. 11). The base plate member 54 is supported (connected) to the substrate 80 via the first springs S2R, S2L and the protruding members 55R, 55L arranged at two locations on the left and right. The protruding members 55R and 55L are fixed to the substrate 80 (the inner wall surface of the casing) and arranged at two locations on the left and right in Fig. 10. The base plate member 54 is connected (supported) to the substrate 80 via the second spring S2T. The substrate 80 side ends of the central shafts of the side rollers 40-4 are supported by the base plate member 54, and the support structure will be described later with reference to Fig. 12.

In Fig. 10, if the plug 10 separated from the socket 20 engages the side rollers 40-4 and/or the front roller 30-4, a tensile force acting on the plug 10 through the filling hose 61 will act on the first and second springs S2R and S2L via the side rollers 40-4 and the base plate member 54, and the first and second springs S2R and S2L are elastically deformed. When the filling hose 61 is pulled in a direction of the arrow E as shown in Fig. 10, the first spring S2R on the right side roller 40-4 side elastically deforms more than the first spring S2L on the left side roller 40-4 side. As a result, the right side region in the longitudinal direction of the base plate-shaped member 54 moves downward from the left side region, the right side roller 40-4 moves downward from the left side roller 40, and the interval (mainly the vertical distance) between the side rollers 40-4 is increased. As a result, the plug 10 is easily removed from the rollers 40-4 and 30-4, and the engagement between the plug 10 and the rollers 40-4 and 30-4 is easily released.

As shown in Fig. 11, the second spring S2T is interposed between the base plate member 54 and the substrate 80 to move the left and right rollers 40-4 in contact with the plug 10 forward and backward (front and back: left and right directions in Fig. 11). Therefore, even when the filling hose 61 is subjected to a tensile force from the front side (pulled in the direction of arrow F in Figure 11), the plug 10 is easily disengaged from the rollers 40-4 and 30-4 by changing the position of the rollers relative to the plug (angle of the rollers relative to the engaged plug). In the second embodiment of Figs. 10 and 11, although not clearly illustrated, as a member for connecting (supporting) the base plate member 54 and the substrate 80, instead of the springs S2L, S2R, and S2T, ball joints with restoring function can also be used. Further, instead of the front roller 30-4, an arm having a circular or oval cross section and a smooth surface may be provided.

In Figs. 10 and 11, adjacent rollers, that is, the front roller 30-4 and the left or right side roller 40-4 are connected at their central shafts. One mode of the connection is shown in Fig. 12. In Fig. 12, the central shaft 31-4 of the front roller 30-4 and the central shafts 41-4 of the side rollers 40-4 are indicated by solid lines, and a hollow rotating body 32-4 of the front roller 30-4 and hollow rotating bodies 42-4 of the side rollers 40-4 are represented by dashed lines. Also, the central shaft 41-4 of the lower roller 40-4 in Fig. 12 is schematically shown as a half cylinder. In Fig. 12, the front roller 30-4 has a central shaft 31-4 and a hollow rotating body 32-4, the hollow rotating body 32-4 is not connected to the central shaft 31-4, so that even if the central shaft 31-4 is fixed, the rotating body 32-4 can freely rotate around the central shaft 31-4. Similarly, the side rollers 40-4 also have central shafts 41-4 and hollow rotating bodies 42-4, and the hollow rotating bodies 42-4 are not connected to the central shafts 41-4, so that even if the central shafts 41-4 are fixed, the rotating bodies 42-4 can freely rotate around the central shafts 41-4. At ends of the side rollers 40-4 on the side of the front roller 30-4, the central shafts 41-4 of the side rollers 40-4 are connected to the central shaft 31-4 of the front roller 30-4 at right angles via fastening members 35. On the other hand, ends of the two side rollers 40-4 on the side of the hydrogen filling device 200 (ends on the substrate 80 side: ends on the side opposite to the front roller 30-4 side) are supported (connected) to the base plate member 54 via fastening members 45.

The central shafts 41-4 of the side rollers 40-4 and the central shaft 31-4 of the front roller 30-4 extend perpendicularly to each other, and it is impossible for one central shaft to rotate relative to the other central shaft. However, the hollow rotating body 32-4 of the front roller 30-4 can rotate around the central shaft 31-4, and the hollow rotating bodies 42-4 of the side rollers 40-4 can rotate around the central shafts 41-4, so that (the rotating body 32-4 of) the front roller 30-4 and (the rotating bodies 42-4 of) the side rollers 40-4 are rotatable even if their central shafts are perpendicular to each other. Other configurations and effects of the second embodiment shown in Figs. 10-12 are the same as those of the first embodiment shown in Figs. 1-9.

Next, the third embodiment of the present invention will be described with reference to Figs. 13 and 14. In Figs. 1 to 12 and 15 (described later), the safety joint housing device 100 (100 to 100-4, 100-6) has the roller arrangement structure 50 (50 to 50-4, 50-6). On the other hand, a safety joint housing device 100-5 according to the third embodiment shown in Figs. 13 and 14 has an arm arrangement structure 50-5 instead of the roller arrangement structure 50. As shown in Fig. 13, the arm arrangement structure 50-5 is provided with a front arm 33 and two side arms 43 adjacent to the front arm 33. The side arms 43 and the front arm 33 are configured to be displaceable. The front arm 33 has a cylindrical portion 33A that is smooth and has a circular cross section (including an oval cross section) and a plate-like portion 33B that is fixed to the cylindrical portion 33A. The side arms 43 have cylindrical portions 43A with a circular shape (including an oval cross section) and plate-like portions 43B fixed to the cylindrical portions 43A. A plate-like portion 33B of the front arm 33 is provided with a pivot portion 33C, and the front arm 33 is rotatably supported by the pivot portion 33C on the substrate 80 (the inner wall surface of the casing) via an arm support member 57. Further, the plate-like portions 43B of the two side arms 43 are provided with shaft support portions 43C, and the side arms 43 are rotatably supported on the substrate 80 by the shaft support portions 43C.

In Fig. 13, the arm arrangement structure 50-5 is provided with return springs S3, S4R, and S4L. A locking portion 33D provided on the plate-like portion 33B of the front arm 33 and a locking portion 57A provided on the arm support member 57 are connected by the restoring spring S3. A locking portion 43D provided on the plate-like portion 43B of the right side arm 43 in Fig. 13 and a locking portion 80A (Fig. 14) provided on the substrate 80 are connected by the restoring spring S4R. A locking portion 43D provided on the plate-like portion 43B of the left side arm 43 and the locking portion 80A provided on the substrate 80 are connected by the return spring S4L. Here, spring constants of the springs S3, S4R, and S4L for restoring the arms are preferably such that the arms 33 and 43 move at about 90% of the tension that separates the plug 10 and the socket 20, for example. If the spring constants of the springs S3, S4R, and S4L for restoring the arms are small, and the arms 33 and 43 move (rotate) easily, the filling hose 61 will easily move. Then, the angle between the direction in which the filling hose 61 is pulled and the longitudinal direction of substrate 80 (a direction of the arrow G in Fig. 13) becomes too large, and the horizontal force acting on the safety joint becomes large, which may cause the plug not to separate from the socket at a predetermined tensile load. Here, the direction in which the filling hose 61 is pulled and the side arm 43 on the right side of Fig. 13 moves is indicated with the arrow H in Fig. 13.

In Fig. 14, for example, when the vehicle (Fig. 16) unexpectedly accelerates and the filling hose 61 is pulled, the plug 10 separates from the socket 20 and the filling hose 61 and plug 10 are pulled into the right side arm 43. Once contacted and engaged, the right side arm 43 rotates in the direction of the arrow H more than in the state shown in Fig. 13. As the right side arm 43 rotates greatly in the direction of the arrow H, the distances (horizontal distance and vertical distance) between the left and right side arms 43 widen, and the distances between the right side arm 43 and the front arm 33 widen, which causes the engagement between the plug 10 and the arms 43, 33 to be easily released. As a result, the plug 10 can be smoothly removed from the arm arrangement structure 50-5 at the lower opening (vehicle side opening) of the casing (Fig. 17). Although not shown, in Figs. 13 and 14, the front arm 33 and the left and right side arms 43 can each be composed of rollers. Alternatively, one of the arms may be composed of an arm having a smooth plane and a circular cross section, the other arms may be composed of rollers, and the arm and the rollers may be combined. Other configurations and effects of the third embodiment shown in Figs. 13 and 14 are the same as those of the embodiment shown in Figs. 1 to 12.

The fourth embodiment of the present invention will be described with reference to Fig. 15. The fourth embodiment differs from the embodiments of Figs. 1 to 14 in the roller arrangement structure, and the structure that allows the side rollers to be displaced. A safety joint housing device 100-6 according to the fourth embodiment has a roller arrangement structure 50-6, and the structure 50-6 includes a roller support member 51-6 for supporting a front roller and side rollers 40-6. The front roller is not shown in Fig. 15, only an end 30-6T of a rotation shaft of the front roller is shown. In Fig. 15, the roller support member 51-6 is entirely composed of a plate-shaped member, and includes a front portion 51A-6 that supports the front roller, and left and right side rollers enclosing portions 51B-6 that support the left and right side rollers 40-6. Each of the left and right side rollers is partially surrounded by the enclosing portions 51B-6. Although not shown in Fig. 15, at a position separated from the substrate 80 (Fig. 1 etc.) that is the inner wall surface of the casing (Fig. 17) toward the front roller 30-6 is provided a support member that supports the roller support member 51-6.

As shown in Fig. 15, the front portion 51A-6 of the roller support member 51-6 and the front portions 51BA-6 of the left and right side roller enclosing portions 51B-6 are configured to be flush with each other. A conventionally known hinge mechanism 56 is provided at each boundary between the front portion 51A-6 and the left and right front portions 51BA-6. Regions 51BA-6 supporting the central shafts of the side rollers 40-6 and a region 51R2-6 in the longitudinal center of the front portion 51A-6 are separated, and are connected by the hinge mechanisms 56. The region 51BA-6 is constituted by the front portion 51BA-6 of the side roller enclosing portion 51B-6. Here, in the front surface portion 51BA-6 of the side roller enclosing portion 51B-6, the central shaft of the side roller 40-6 passes through a through hole (not shown) formed in the front portion 51BA-6, and an end portion 40-6T of the central shaft of the side roller 40-6 is configured so that the central shaft does not slip out of the through hole. The central shaft of the front roller also passes through a through hole (not shown) formed in the roller support member 51-6, and the outer diameter of the end portion 30-6T of the central shaft is such that the central shaft does not come out of the through hole. Although not clearly illustrated, the hinge mechanism 56 is provided with a restoring elastic member (for example, a spring).

The region 51BA-6 (the front portion of the side roller enclosing portion 51B-6) supporting the central shaft of the side roller 40-6 and the region 51R2-6 in the longitudinal center of the plate member are connected by the hinge mechanism 56, and the side roller enclosing portion 51B-6 of the roller support member 51-6 and the side roller 40-6 become rotatable in a direction of the arrow I. Even when the plug 10 is engaged with the side rollers 40-6 and the front roller (not shown in Fig. 15), rotating the side roller enclosing portion 51B-6 and the side rollers 40-6 in the direction of the arrow I with respect to the front portion 51A-6 of the roller support member 51-6 allows the relative positional relationship between the rollers 40-6 and the front roller to change, which increases the intervals between the rollers, so that it becomes a state in which the plug 10 is easy come off from the side rollers 40-6 and the front roller. After the plug 10 is disengaged from the side rollers 40-6, by the restoring elastic member (not shown) of the hinge mechanism 56, the side roller enclosing portion 51B-6 and the side rollers 40-6 return to positions where the front part 51BA-6 of the side roller enclosing portion 51B-6 and the front portion 51A-6 of the roller support member 51-6 are flush with each other.

In Fig. 15, the hinge mechanism 56 is provided at the boundary between the left and right side roller enclosing parts 51B-6 (the front part 51BA-6 thereof) and the front part 51A-6 of the roller support member 51-6. A hinge mechanism may be provided at only one of the boundaries. Also, although not shown in Fig. 15, the side rollers 40-6 and/or the front roller can be made of resin (eg, urethane resin) or hard sponge. Other configurations and effects of the fourth embodiment shown in Fig. 15 are the same as those of the embodiment shown in Figs. 1 to 14.

It should be noted that the illustrated embodiments are merely examples and are not intended to limit the technical scope of the present invention.

### DESCRIPTION OF THE REFERENCE NUMERALS

10 plug (vehicle side member of safety joint)
20 socket (member on filling device side of safety joint)
30 front roller
33 front arm
33A cylindrical portion of front arm
33B plate-like portion of front arm
40 side roller
41 central shaft of side roller
43 side arm
43A cylindrical part of side arm
43B plate-like part of side arm
50 roller arrangement structure
51 roller support member
51A front part
51B back part
51B-6 side roller enclosing part
51BA-6 region where plate-shaped member supports central shaft of side roller
51R2-6 region in longitudinal center of plate-shaped member
51R-3 area from through hole to outer edge of front part
52 elongated hole
52-2 elongated hole forming notch
52-3 circular through hole
54 base plate-shaped member
55R, 55S protruding members
56 hinge mechanism
61 filling hose
70, 70A guide members
80 substrate (inner wall surface of casing)
100 safety joint housing device
101 safety joint
S2R, S2L springs (first elastic members)
S2T spring (second elastic member)
S3, S4R, S4L return springs

## Claims

1. A safety joint housing device for housing a safety joint including a plug connected to a filling hose and a socket provided in a filling device, said safety joint separating when a tensile load above a predetermined level is applied, said safety joint housing device comprising:
a casing for housing the plug and the socket in a connected state;
a front roller disposed on a front side of the casing at a lower opening from which the filling hose is led out from the casing so as to be rotatable about a horizontal axis; and
two side rollers adjacent to the front roller and rotatably arranged about horizontal axes orthogonal to the axis of the front roller, at least one of the two side rollers is displaceable,
wherein the filling hose passes through the casing side of a U-shaped portion formed by the front roller and the two side rollers.

2. The safety joint housing device as claimed in claim 1 further comprising a front portion for supporting the front roller, and the front portion is formed with an elongated hole into which one of the central shafts of the side rollers is inserted.

3. The safety joint housing device as claimed in claim 1 further comprising a front portion for supporting the front roller, and a notch is formed in the front portion, one end of which reaching an outer edge of the front portion.

4. The safety joint housing device as claimed in claim 1 further comprising a front portion for supporting the front roller, and a circular through-hole into which at least one of central shafts of the side rollers is inserted is formed in the front portion, and a region extending from the through-hole to an outer edge portion of the front portion is configured to be deformable or breakable.

5. The safety joint housing device as claimed in one of claims 1 to 4 further comprising a hollow guide member in the casing, wherein the plug separated from the socket is arranged to pass through a hollow portion of the guide member, and a lower opening of the guide member is located near the U-shaped portion.

6. The safety joint housing device as claimed in one of claims 1 to 4 further comprising a roller support member for supporting the front roller and the two side rollers, said roller support member being generally configured in a U-shape, and an upper open space of the U-shape portion of the roller support member being positioned above the front roller and the side rollers.

7. The safety joint housing device as claimed in claim 1, wherein an end of a central shaft of at least one of the side rollers is supported by a base plate-shaped member, and said base plate-shaped member is connected to a projecting member fixed to an inner wall surface of the casing through a first elastic member and said base plate-shaped member is connected to the inner wall surface of the casing through a second elastic member.

8. The safety joint housing device as claimed in claim 1, wherein a periphery of each of the two side rollers is partially surrounded by a side roller enclosing portion of a roller support member that supports the front roller and the two side rollers, and a front part where the front roller is supported is composed of a plate-shaped member, and an area where a longitudinal end of the plate-shaped member supports a central shaft of the side roller and a longitudinally central area of the plate-shaped member are separated from each other, and the areas are connected by a hinge mechanism.

9. A safety joint housing device for housing a safety joint including a plug connected to a filling hose and a socket provided in a filling device, said safety joint separating when a tensile load above a predetermined level is applied, said safety joint housing device comprising: a casing for housing the plug and the socket in a connected state; and an arm arrangement structure at a lower opening of the casing,
wherein said arm arrangement structure includes a front arm and two side arms adjacent to the front arm, at least one of the side arms being displaceable, each of the front arm and the side arms has a cylindrical portion with a smooth circular cross-section (including an oval shape) and a plate-like portion fixed to the cylindrical portion, the plate-like portion is rotatably supported on an inner wall surface of the casing, and each arm is connected to an elastic member connected to the inner wall surface of the casing or to a member fixed thereto.
